Europäisches Patentamt

(19) **European Patent Office**

Office européen des brevets

(11) Publication number: **0 002 551**
**A2**

(12) **EUROPEAN PATENT APPLICATION**

(21) Application number 78200342.0

(22) Date of filing: 04.12.78

(51) Int. Cl.²: **A 22 C 21/00**

(30) Priority: 09.12.77 NL 7713637

(43) Date of publication of application:
27.06.79 Bulletin 79/13

(84) Designated contracting states:
BE CH DE FR GB SE

(71) Applicant: **Moba Holding Barneveld B.V.**
**Stationsweg 117**
**NL-3771 VE Barneveld(NL)**

(72) Inventor. **van Brummelen, Johannes**
**Gasthuisstraat 15**
**Barneveld(NL)**

(74) Representative: **de Wit, Gerard Frederik, Ir.**
**Breitnerlaan 146**
**NL-2596 HG Den Haag(NL)**

(54) Suspension hook for a poultry and device provided with such a hook.

(57) A hook for suspending poultry by its knee-joints, said hook having two claws each of which provided with two fingers, that can pivot away from each other. Preferably a clamping member is provided that is pivotable towards the claws and that can be locked in its position near to the claws.

EP 0 002 551 A2

./...

FIG. 1

Suspension hook for a poultry and device provided with such a hook.

Hooks for suspending a poultry by its knee-joints are known, which hooks are provided with two claws, which each are delimited by two fingers. Discharging of these hooks normally occurs, in that they are pivoted downwardly such that the knee-joints can slide out of the claws.

When handling poultry mechanically, for instance packing or modelling for packing poultry the problem presents itself, that the hook not only should retain the knee-joints in a reliable fashion, but has also to give them free, such that the location, where the legs are located with respect to the body of the poultry, is very little influenced. Moreover these claws need to have space for movement for giving the knee-joints free, which may incur difficulties, if one wants to lay the legs well against the body of the poultry.

Finally the security should exist, that the claws indeed become free from the knee-joints and will not take along one or two legs back when they are withdrawn.

With packing and modelling devices known up to now it has been shown that specially difficulties occur if one wants to use the hook also as a control and pressure means to control the modelling process of the poultry by means of the legs.

The invention aims to provide a hook, which in all the above mentioned respects satisfies better en consequently allows a simplification of the modelling apparatus, because the hook to which the legs are suspended without the above mentioned disadvantages can also be used as pressing member for the poultry when modelling it.

A further aim of the hook according to the invention is in the universal applicability, wherewith also in other applications an exceptional reliability of the retaining of knee-joints is obtained, also with deviating dimensions whereas at the other side a very reliable discharge of the hook is obtained.

The above aims are attained according to the invention in that one of the fingers of each claw is pivotable between a first position and a second position, the ends of the fingers of each claw being nearer to each other in the first position than in the second one.

Herewith it is possible that three fingers are present, one of which is fixed and situated centrically and at both sides of it a pivotable finger.

Preferably the pivotable fingers are connected to rods which in the position of use are about vertical and are pivotable about their axes, wherewith the fingers with respect to the rods are oriented under a somewhat acute angle and are provided at their ends with an upwardly curved part. A somewhat acute angle indicates an angle, which is little smaller than $90^\circ$.

Important with application of the invention is the possibility to apply a clamping member, that can be moved towards the fingers and away from them. By reason of this it is possible to obtain a positive enclosure of the knee-joints of the poultry, irrespective of their dimensions. Moreover it is attained in this way, that longitudinal forces can be excerted on the thigh-bones of the poultry without causing them to shift upwardly in the claws. This improves in a high degree the accuracy with which the location of the knee-joints can be carried out by means of the hook.

Preferably the clamping member is connected to one member of a locking device consisting of two locking members to wit a ratchet and a rack, the other member having a fixed position with respect to the claws.

This feature prevents, that the clamping member is slided back when the knee-joints excert an upwardly directed force on the clamping member.

The hook according to the invention advantageously can be mounted in such a way, that it can carry out a restricted swinging movement. This restricted swinging movement, in combination with a vertical movement, gives the possibility to use completely the advantage, that the hook under all circumstances retains the knee-joints well without allowing the thigh-bones to shift in it, so that it further is possible to change the position of the hook when this is necessary from a suitable position for attaching the knee-joints towards a position suitable for a modelling apparatus or suchlike. In that instance the hook can also serve the purpose of pressure member so that a modelling or packing apparatus for poultry need not to have a separate pressure member.

An example of this restricted swinging movement is formed by the application of the invention in a device known per se for handling poultry, which device is provided with a frame movable along a fixed track, which frame bears a sub frame, that is vertically movable with respect to the frame and supports a hook as described above. According to the invention in that instance control means are provided which are connected to the hook and the frame respectively to impart to the hook a restricted swinging movement, a guide being present, that controls the opening and closing movements of the fingers of the hook.

Though the invention is also applicable in other devices that are not provided with a frame movable along a track, it is in the following elucidated by hand of the drawing, which shows an embodiment of the device having such a frame.

In the drawing is:

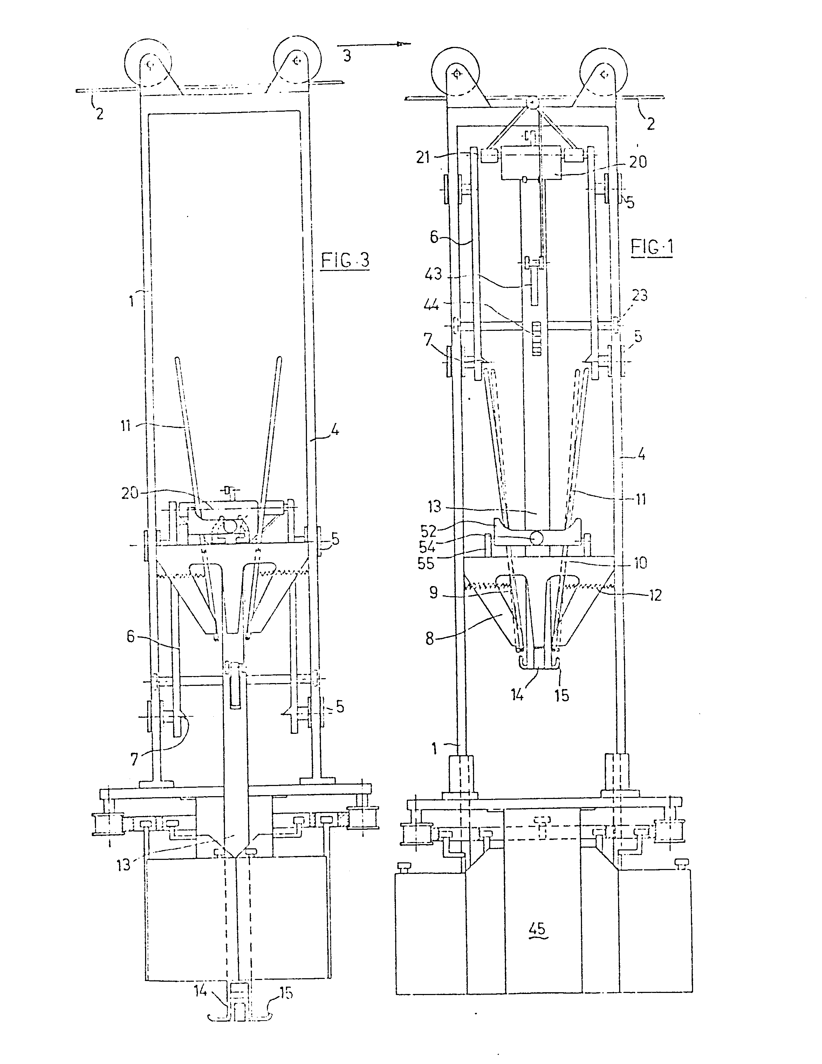

fig. 1 a frontal view of a device provided with a hook according to the invention;

fig. 2 a side view of the same device;

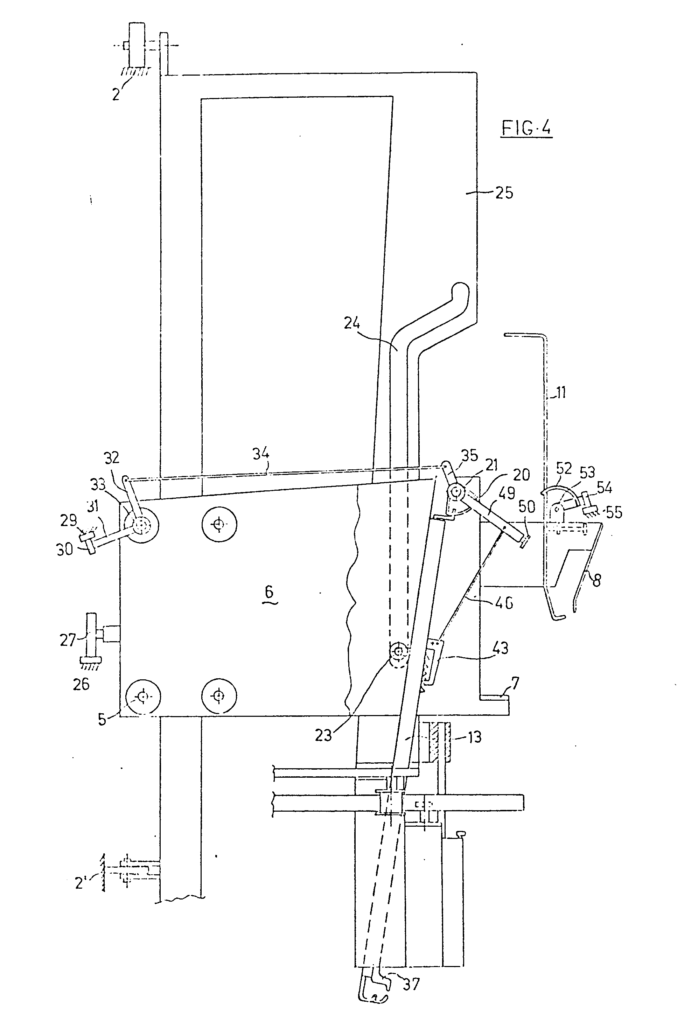

fig. 3 a frontal view of the device in a further working position;

fig. 4 a side view of the device in this further working position;

fig. 5 a cross-section of a hook according to the invention;

fig. 6 a cross-section over the line VI-VI of fig. 5;

fig. 7 a cross-section analogeous to fig. 5 in an other position;

fig. 8 a cross-section over the line VIII-VIII of fig. 7;

fig. 9 a detail seen from below with the hook in the position of fig. 7; and

fig. 10 the shape of different control guides.

In the drawing reference 1 indicates a frame, that by means of wheels can be moved in the direction of the arrow 3 along a track schematically indicated with 2 and 2'.

The frame 1 is provided with vertical rails 4 along which a sub frame 6 is vertically movable by means of wheels 5.

The sub frame 6 is provided with abutments 7. To the frame 1 a sheet 8 is be mounted with slits 9. Further the sheet 8 supports pivot pins 10 about which feelers 11 are pivotably mounted. The feelers 11 are urged into the position shown with drawn lines by means of springs, by reason of which their hooked ends are located below the abutments 7 and consequently prevent that the frame 6 can move downwards.

The sub frame 6 supports further a bar 13, which at its lower side is provided with a fixed finger 14 and two pivotable fingers 15. These fingers together form two claws.

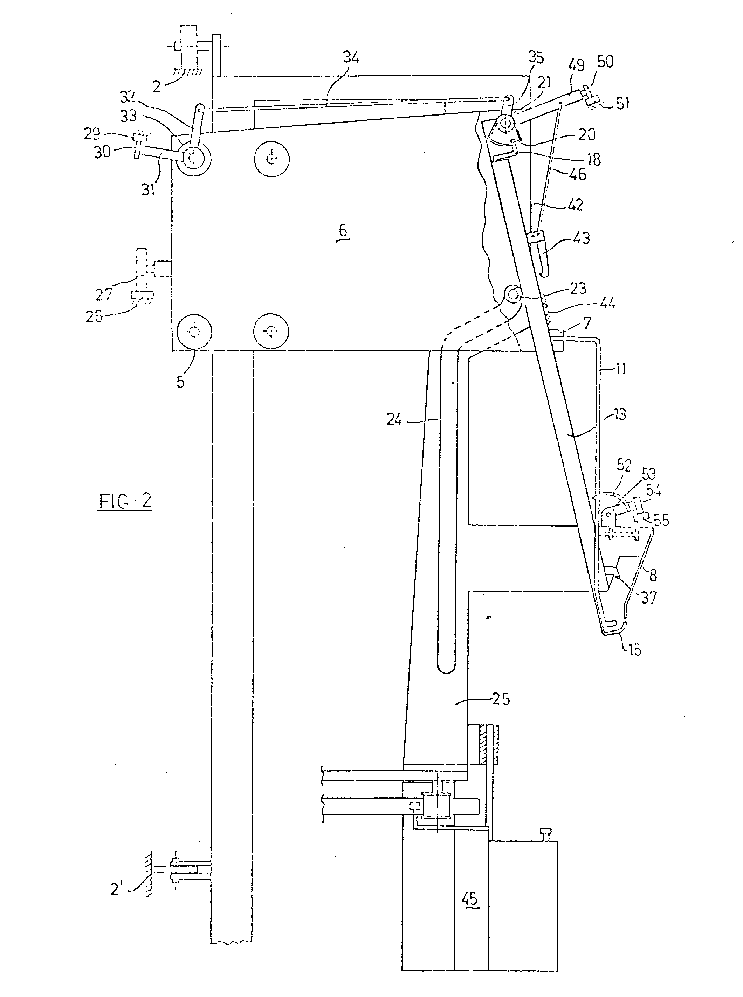

To the bar 13 further a follow roll 23 (fig. 2) is mounted, which runs in a slit 24, which is applied in a sheet 25, that is fixedly connected to the frame 1.

To the sub frame 6 a follow roll 27 is mounted, which bears on a control guide 26 mounted along the track 2, 2". A control sheet 52 that at 53 is pivotably connected to the sheet 8, is provided with a follow roll 54 which cooperates with a fixed guide 55. When the control plate 52 under influence of an upward inclining part of the guide 55 is rotated counter-clockwise in fig. 2 it moves the feelers 11 inwards.

After the the feelers 11 have taken their inward pivoted position, the knee-joints of a poultry are inserted in the slits 9 and moved downward until they are located in the claws formed by the fingers 14 and 15.

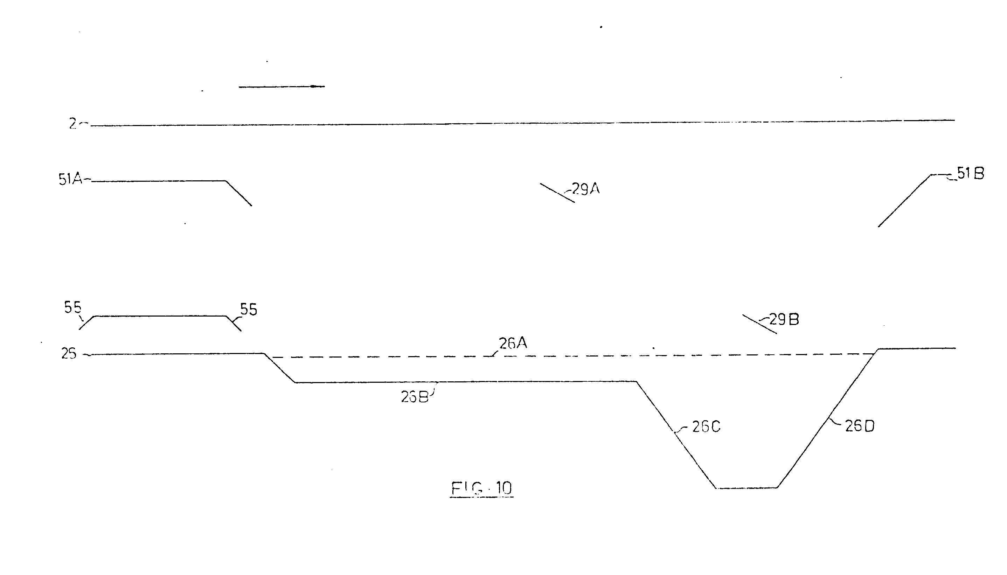

Following to this the guide 55 declines downwardly (fig. 10) wherewith the feelers 11 normally remain in their position indicated with interrupted lines under influence of the knee-joints, so that the sub frame 6 can move downwards. If, however, no poultry is suspended to the claws formed by the fingers 14, 15 or only with one leg, the sub frame 6 bears on both feelers 11 or one of them when the guide 26 declines downwards. By reason of this the bar 13 will descend only very little, so that all activities initiated by a further descending movement of the sub frame 6 will not occur. This prevents for instance, that a poultry suspended by one leg will be carried to the modelling apparatus 45 that has been schematically indicated, in which it possibly would be modelled and/or packed in a wrong way or could cause disturbance of the apparatus.

When the claws 14, 15 do not support any poultry it will be clear that only a very limited descending movement of the sub frame 6 is allowed. This can also be used, for instance by not activating the modelling apparatus for for instance supplying packing material (not shown).

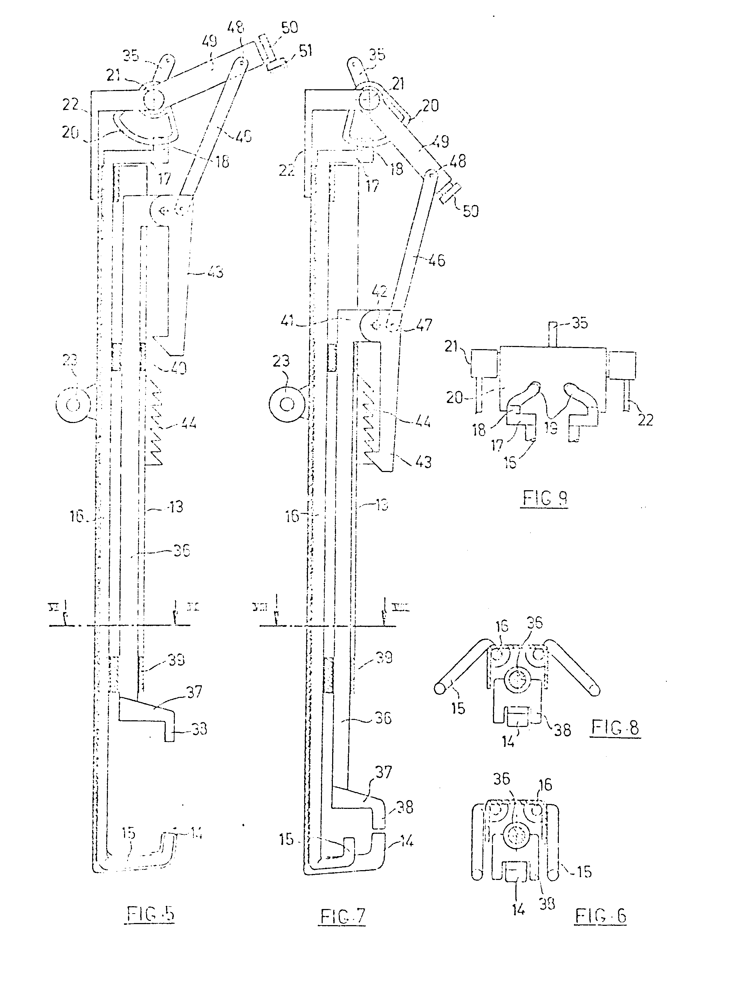

Along the track 2, 2' further a fixed guide 29 is mounted (fig. 2) under which a follow roll 30 runs, which is connected to an arm 31. This arm forms together with an arm 32 a hooked arm that is pivotable about a shaft 33. To the arm 32 a link 34 is connected which at its other end is connected to an arm 35, that fixedly is connected to a plate segment 20, that is rotatable about a shaft 21, which is supported by supports 22 connected to the sub frame 6 (vide fig. 9). When the guide 29 declines somewhat the hooked arm 31, 32 is rotated counter-clockwise, so that link 34 moves towards the left and plate segment 20 is rotated also counter-clockwise, by reason of which slide tabs 18 slide in slits 19 of the plate segment 20 to pivot rods 16, that support the fingers 15, about their axis, so that the fingers 15 pivot away from the fixed finger 14.

7

The whole 30-35 inclusive is kept in the position of fig. 2 by means that are not shown, unless the guide 29 presses the roll 30 downwards. This guide 29 consequently is only mounted at some locations along the track 2, 2'.

A rod 36 (fig. 5-8 incl.) supports at its end a clamping member 37, that ends in two downwardly directed teeth 38.

The rod 36 can vertically slide in sleeves 39 and 40 connected to bar 13 and is hooked at its upper end 41. By means of a shaft 42 a ratchet 43 is pivotably mounted to the part 41. A tooth rack 42 is fixedly connected to the bar 13. A link 46 is at 47 connected to the hook 43 and at 48 to a frame 49 that is pivotable about the shaft 21 and at its end supports a follow roll 50, which can run on a guide 51. This guide is mounted along only a part of the track 2, 2'.

When the guide 51 declines or ends, that rod 36 together with the ratchet 43 can move downwardly until the clamping member 37 engages the knee-joints of the poultry's legs suspended in the fingers 14, 15. By engagement of the rack 44 with the ratchet 43 the latter and consequently the clamping member 37 cannot move upwardly with respect to the fingers 14 and 15. Consequently it is possible to excert an upwardly directed force on the legs of the poultry without having them sliding upwardly in the fingers, which otherwise could be possible, because the legs below the joints to which they are suspended, are thinner than these joints. By reason of this it is possible when modelling or packing poultry to control in an accurate way the location of their legs and to prevent, that the legs become free from the fingers.

The finger 15 that can pivot sidewards have proven to be very favourable when freeing the knee-joints in comparison

- 8

with other claw constructions, for instance claws which can pivot about a horizontal pivot line. The fingers can easily pivot away, when the legs are firmly pressed against the body of the poultry, which causes that with discharging of the fingers the legs remain well on their place and that no chance exists, that the joints of the legs will be moved somewhat back, when the fingers are withdrawn. Further it is of great importance that the indicated construction under elimination of discharge difficulties allows to retain the legs well so that in modelling and packing devices a separate pressing member for the poultry is not necessary.

The working of the device described is in the following elucidated by hand of fig. 10, in which different guides are schematically indicated. The device moves along these guides from left to right in fig. 10.

The track 2 remains always on the same level, so that also the frame 1 remains always on the same level. The guide 26 firstly is at its greatest height and supports the sub frame 6. In this part a poultry is suspended by means of its kee-joints in the claws 14, 15. For that reason the guide 55 has first moved the sheet 52 upwards and by reason of this pivoted the feelers inwards, so that the knee-joints are not hindered by the feelers. Shortly before the first declining part of the guide 26 the guide 55 pivots the sheet 52 back, so that the feelers can pivot back also, if no knee-joints are present in the claw 14, 15. If the latter occurs for at least one claw at least one abutment 7 will engage a feeler 11, so that the interrupted line 26A in fig. 10 will be followed.

If both claws contain a knee-joint, the sub frame 6 follows the track defined by the guide part 26B.

The guide 51 has · part 51A, that ends shortly before the guide 26 has a downwardly declining part. By reason of this the frame 49 pivots downwardly and the clamping member 37 engages the knee-joints, wherewith the ratchet 43 engages the rack 44 in a position, in which said knee-joints are enclosed between the claws 14, 15 and the clamping member 37.

The follow roll 23 is now very near to the upper side of the vertical part of the slit 24 and the arm 13 has pivoted counter-clockwise, so that the claws 14, 15 are located above a schematically indicated modelling apparatus 45.

In the part 26C of the guide 26 the sub frame 6 moves further downwardly and the claws are pushed into the modelling apparatus. This apparatus closes therewith to obtain a desired modelling which, however, has not been elucidated, because it is no part of the invention. The guide 29B now moves via 30, 31, 32, 33, 34, 35, 20, 19, 18 and 16 the fingers 15 away from the fixed finger 14, by reason of which the knee-joints are freed.

Following to this the sub frame 6 is moved upwardly by the part 26D of guide 26. After this the follow roll 50 engages the guide part 51B of guide 51, by reason of which arm 46 is drawn upwardly and ratchet 43 pivoted counter-clockwise, so that it does not engage the rack 44 and the rod 36 with the clamping member 37 are pulled upwardly. When not both knee-joints are present in the claws 14, 15 and the device follows the track 26A, the follow roll 30 engages the guide 29A, so that any poultry suspended by one joint will be discharged via 30, 31, 32, 33, 45, 20, 19, 18, 16 and 15. This discharge does not influence the fact that the feelers 11 support the sub frame 6, so that it remains supported by these feelers, until follow roll 27 engages guide part 26D and lifts the sub frame somewhat, by reason of which the feelers come free from the abutments 7.

10

It will be clear that this property of the feelers, to
wit the possibility to support the frame when no poultry
is present, can be used to leave out a guide, such as
would be a guide corresponding to 26A.

1

Claims:

1. Hook for suspending poultry at its knee-joints, provided with two claws (14, 15), which each are are delimited by two fingers (14,15), characterized in that one of the fingers (14) of each claw is pivotable between a first position and a second position, the ends of the fingers of each claw being nearer to each other in the first position than in the second position.

2. Hook according to claim 1, characterized in that three fingers are present, one (15) of which is fixed and situated centrically and at both sides of it a pivotable finger (14).

3. Hook according to claim 1 or 2, characterized in that the pivotable fingers are mounted to rods (16), which are in the position of use about vertical and are pivotable about their axis.

4. Hook according to claim 1, 2 or 3, characterized in that the fingers in the position of use incline somewhat upwardly in the direction towards their free end and at this end are provided with an upwardly curved part.

5. Hook according to one or more of the preceeding claims, characterized by a clamping member (37) movable towards the fingers and away from them.

6. Hook according to claim 5 and 2, 3 or 4, characterized in that the clamping member at its end (38), that is positioned opposite the fixed fingers, is forked.

7. Hook according to claim 5 or 6,
   characterized in
   that the clamping member (37) is connected to one member (43) of a locking device consisting of two locking members, to wit a ratchet (43) and a rack (44), the other member (44) having a fixed position with respect to the claws (14, 15).

8. Device according to claim 7,
   characterized in
   that a control mechanism (46, 47, 48, 49, 50) for the locking device is present, that is connected with one (43) of the locking members, which locking member (43) is hingedly connected to the clamping member (37), which is slidingly movable whereas the other locking member is fixedly mounted.

9. Device for handling poultry, provided with a frame (1) that is movable along a fixed track (2,2'), which frame contains a sub frame (6), that is vertically movable with respect to the frame, the sub frame supporting a hook (14,15) according to one or more of the preceding claims,
   characterized in
   that control means (23,24) are present which are connected to the hook and the frame respectively to impart to the hook a restricted swinging movement, a cam (29) being present, that controls the opening and closing movements of the fingers of the hook.

10. Hook and device, mainly as described and/or elucidated by hand of the drawing.

FIG.3

FIG.1

45

FIG·2

0002551

FIG·4

FIG·5

FIG·7

FIG·6

FIG·8

FIG·9

2 —

51A—          29A        51B

55    55       29B

25     26A

26B      26C     26D

FIG. 10